# EUROPEAN PATENT APPLICATION

(11) **EP 0 865 205 A1**
(43) Date of publication of application: **16.09.1998**
(21) Application number: 98104266.6
(22) Date of filing: 10.03.1998
(51) Int. Cl.: H04N 7/10, G06F 17/30

(54) **Information preparation method applicable to information distribution system**

(30) Priority: 10.03.1997 JP 54779/97
(71) Applicant: Digital Vision Laboratories Corporation, Minato-ku, Tokyo (JP)
(72) Inventor: Suzuki, Hiroyuki, Nakahara-ku, Kawasaki-shi (JP)
(74) Representative: von Fischern, Bernhard, Dipl.-Ing.

(57) **Abstract**

In a system for editing and distributing magazines, each of the writers (A1) asked by an editor (E1) for contribution prepares a description of the contents of a work that is newly written by him or her or already exists (including processing conditions) and the location of the contents. The editor (E1) collects the information packages from the writers (A1) and edit them according to a predetermined data format before handing over the edited product to the distributor (D1), who modifies the product into a data format containing a link section for detecting appropriate contents according to the viewing/listening environments of the subscribers V1-1 through V1-n) (including the resolution of the display screen) of his or her service area and send the modified product to the subscribers (V1-1 through V1-n).

## Description

This invention relates to an information processing system connected to a network and, more particularly, it relates to an information distribution system adapted to prepare new information by combining different informational materials distributed across a communication network and distributing such information through the network.

This application is based on Japanese Patent Application No. 9-54779, filed on March 10, 1997, the content of which is incorporated herein by reference.

In recent years, new information distribution systems have been developing in the rapidly changing communication network environment involving LAN and internets. Such systems typically offer services that allow computers connected thereto to receive and exchange various types of information. Among others, a system for preparing new multimedia information by combining different informational materials distributed across a communication network and distributing such information through the communication network is expected to be highly viable. Such information may typically be provided as multimedia information realized by combining or coordinating different forms of media including text, voice and movie. For the purpose of the present invention, preparation of multimedia information may include editing informational materials and performing other relevant processing operations.

A system for editing and distributing magazines and books is a typical example of information distribution system. Note that, thanks to the recent technological development, currently a magazine or a book does not necessarily mean a printed matter prepared by using ink and paper. Now, it can be printed electronically.

With such an information distribution system, the editor may ask a number of writers (novelists, reporters, camerapersons etc.) to contribute articles, novels, etc., edit the contributed works into an information package, and then send the package, or edition, to distributors (information service providers). Note that editor, writer and distributor as used herein represent a concept that may include the use of computers. A distributor may be a CATV (cable TV) station, a digital satellite TV station or an internet service provider and provides a plurality of users (viewers/listeners or subscribers) with information in the form of magazines and books.

For each edition, the editor selects writers and asks each of them to contribute an article, specifying the topic and the approximate length. Then, the editor collects the works of the writers and edits them, designing a physical layout for them to produce an information package, before he or she hands it over to certain information distributors, who by turn distribute the edition to the respective subscribed viewers/listeners (subscribers). The term of viewer/listener as used herein represents a concept that may include the use of a personal computers and/or a digital TV receiving set.

A system for preparing new multimedia information by combining different informational materials distributed across a communication network and distributing such information through the network as described above is expected to be highly viable as communication networks develop. Information can be exchanged within a communication network typically by means of a markup language such as an SGML (standard generalized markup language) or an HTML (hypertext markup language) and a specific data format. The edited product that is distributed may typically be displayed on the display screens of computers and/or TV receiving sets, although it may also be distributed by way of DVD and other recording media.

However, when realizing an information distribution system as described above, problems arise including the following.

The editor may want to include the physical layout of articles when distributing an edition to the subscribers. However, the editor cannot expect all the viewing/listing environment of subscribers, such as display resolution and/or available resources, and write down the physical layout for each cases. Hence, there shall be many cases where the subscriber's system cannot layout the edition as described or in worst case it cannot present any part of the edition to the subscriber.

Additionally, it is not easy for the editor and the distributors to edit the informational materials through alterations, insertions and deletions, taking the request, if any, and the profile (registered attributes) of each subscriber into consideration. When a plurality of writers cooperate to write an article or a series of articles, it is necessary for each of the writers to refer to the entire article(s) while each of the writers controls his or her own part of the article(s). However, it is difficult to implement this function.

Therefore, the object of the present invention is to provide an information distribution system of the type under consideration that allows editing operations of preparing and/or altering information to be conducted easily according to editing conditions including the viewing/listening environment and the information preparing environment.

According to an aspect of the invention, there is provided an information processing apparatus connected to a network comprising: means for receiving information including location data of contents and condition data for editing the contents; and means for editing the contents according to the condition data and preparing an information package.

According to a second aspect of the invention, there is provided an information processing apparatus connected to a network comprising: means for receiving an information package; means for extracting a link section including condition data for editing contents and location data of the contents from the information package; means for retrieving contents meeting the condition data; and processing means for editing the retrieved contents according to the condition data in the link section and altering the information package according to the editing.

According to a third aspect of the invention, there is provided an information processing method to be used in an information processing apparatus connected to a network, the method comprising the steps of: receiving information including location data of contents and condition data for editing the contents; and editing the contents according to the condition data and preparing an information package.

According to a fourth aspect of the invention, there is provided an information processing method to be used in an information processing apparatus connected to a network, the method comprising the steps of: receiving an information package; extracting a link section including condition data for editing contents and location data of the contents from the information package; retrieving contents meeting the condition data; and editing the retrieved contents according to the condition data in the link section and altering the information package according to the editing.

According to a fifth aspect of the invention, there is provided a memory storing computer-executable program code for processing information, the program code comprising: means for causing a computer to receive information including location data of contents and condition data for editing the contents; and means for causing a computer to edit the contents according to the condition data and prepare an information package.

According to a sixth aspect of the invention, there is provided A memory storing computer-executable program code for processing information, the program code comprising: first means for causing a computer to receive an information package; second means for causing a computer to extract a link section including condition data for editing contents and location data of the contents from the information package; third means for causing a computer to retrieve contents meeting the condition data; and fourth means for causing a computer to edit the contents detected according to the condition data in the link section and alter the information package according to the editing.

Where the present invention is applied to a system for editing and distributing magazines and books, each of the writers asked to contribute an article provides the editor with information including his or her work and metadata (including processing conditions) for the work. The editor collects information from the writers and arranges them in a given data format to produce an information package, or an edition, before he or she hands it over to the distributors, who change the information (edition) into another data that includes links for utilizing applicable contents (articles). With such a system, each of the subscribers can utilize the edition in a mode of utilization that best fits his or her own viewing/listening environment.

Thus, according to the invention, editing operations of preparing and/or altering information can be conducted easily according to editing conditions including the viewing/listening environment and the information preparing environment.

The invention can be more fully understood from the following detailed description when taken in conjunction with the accompanying drawings, in which;
FIG. 1 is a schematic illustration of the concept of an embodiment of information distribution system according to the invention.
FIGS. 2A and 2B are schematic views of a computer that can be used by any of the editor, the writers, the distributor and the subscribers of the information distribution system of FIG. 1.
FIG. 3 is a schematic illustration of the configuration of an information package to be transmitted through the information distribution system of FIG. 1.
FIG. 4 is a block diagram of the information processing feature of the computer as shown in FIGS. 2A and 2B.
FIG. 5 is a flow chart of a processing operation to be conducted in the editor's computer of the editor in the information distribution system of FIG. 1.
FIG. 6 is a flow chart of a processing operation to be conducted in the distributor's computer in the information distribution system of FIG. 1.
FIG. 7 is a flow chart of another processing operation to be conducted in the distributor's computer in the information distribution system of FIG. 1.
FIG. 8 is a flow chart of still another processing operation to be conducted in the distributor's computer in the information distribution system of FIG. 1.
FIG. 9 is a flow chart of a processing operation to be conducted in the distributor's computer in the information distribution system of FIG. 1 when the editor is also subscribers of the system.

Now, an embodiment of the present invention will be described by referring to the accompanying drawing.

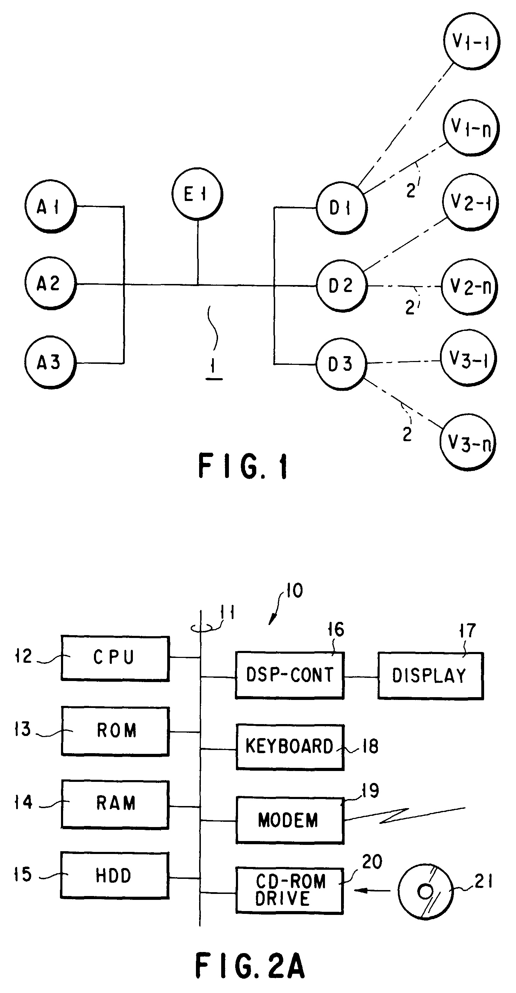

Firstly, the embodiment will be described in terms of a computer that can be used by any of the editor, the writers, the distributor and the subscribers of the information distribution system will be described by referring to FIGS. 1 through 4.

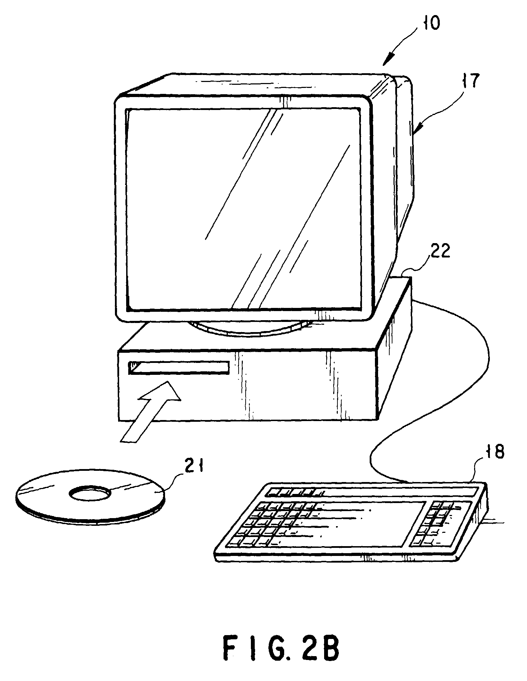

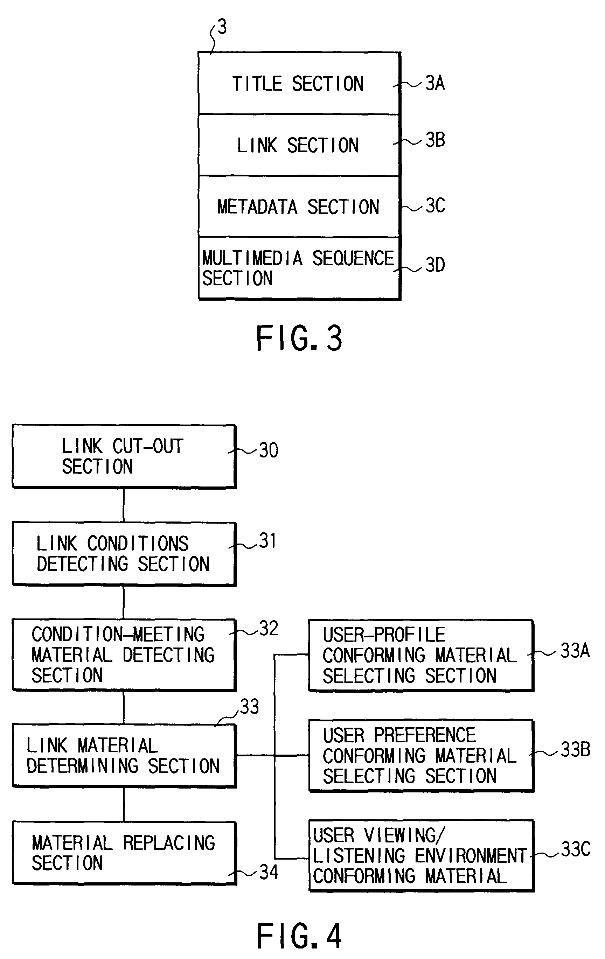

FIG. 1 is a schematic illustration of the concept of an embodiment of information distribution system according to the invention and FIGS. 2A and 2B respectively shows the configuration and a schematic perspective view of a computer that can be used by any of the editor, the writers, the distributor and the subscribers of the information distribution system. FIG. 3 is a schematic illustration of the configuration of an information package to be transmitted through the information distribution system of and FIG. 4 is a block diagram of the information processing feature of the information distribution system.

Referring to FIG. 1, showing the concept of the embodiment of information distribution system according to the invention, assume here that a magazine which is an electric publication (which may also be referred to as electronic information or digital contents) is edited and distributed to subscribers (viewers/listeners) V1-1 through V1-n, V2-1 through V2-n and V3-1 through V3-n by way of a CATV (community antenna television) network 2. It will be appreciated that the CATV network 2 may be replaced by a computer-linked network such as internet, satellite broadcasting or LAN (local area network).

The publisher of the magazine has editor E1 and a plurality of writers A1 through A3 in mind. Note that editor E1, writers A1 through A3 and distributors D1 through D3 represent a concept that includes the use of computers that are information processing apparatus connected to a computer network 1 such as internet so that they can exchange information with one another. Note also that subscribers V1-1 through V1-n, V2-1 through V2-n and V3-1 through V3-n represents a concept that includes the use of computers, each of which is connected to the computer network 1 by way of the related one of the distributors D1 through D3 so that the subscribers can access the information controlled by any of the editor E1 and writers A1 through A3. Each of the editor E1, writers A1 through A3 and distributors D1 through D3 possesses a memory device (e.g., a hard disc device or an optical disc device) for storing information and controls information by holding the memory device.

FIGS. 2A and 2B show a computer that can be used in the above described information distribution system.

Referring to FIG. 2A, the computer 10 comprises a CPU (central processing unit) 12, a ROM (read-only memory) 13, a RAM (random access memory) 14, an HDD (hard disc drive) 15, a display controller (DSP-CONT) 16, a keyboard 18, a modem 19, a CD-ROM (compact disc-read only memory) drive 20, which are connected to each other by way of a bus 11.

The CPU 12 controls the entire operation of the computer 10 and operates according to the programs stored in the ROM 13 or RAM 14. The ROM 13 stores programs necessary for operating the CPU 12. The RAM 14 also stores programs necessary for operating the CPU 12 in addition to various processing data.

The HDD 15 operates as secondary memory device and stores data transmitted through the network.

The display controller 16 is adapted to connection to a display 17 such as a CRT (cathode-ray tube) or a liquid crystal display. The display controller 16 controls the display operation of the display 17.

The keyboard 18 is an input device for entering operator's instructions. The keyboard 18 may be replaced by a mouse or a track ball.

The modem 19 is connected to the computer network 1 and operates for the exchange of data between the computer 10 and the network 1.

The CD-ROM drive 20 is designed to receive a CD-ROM 21 and read the data stored in the CD-ROM 21.

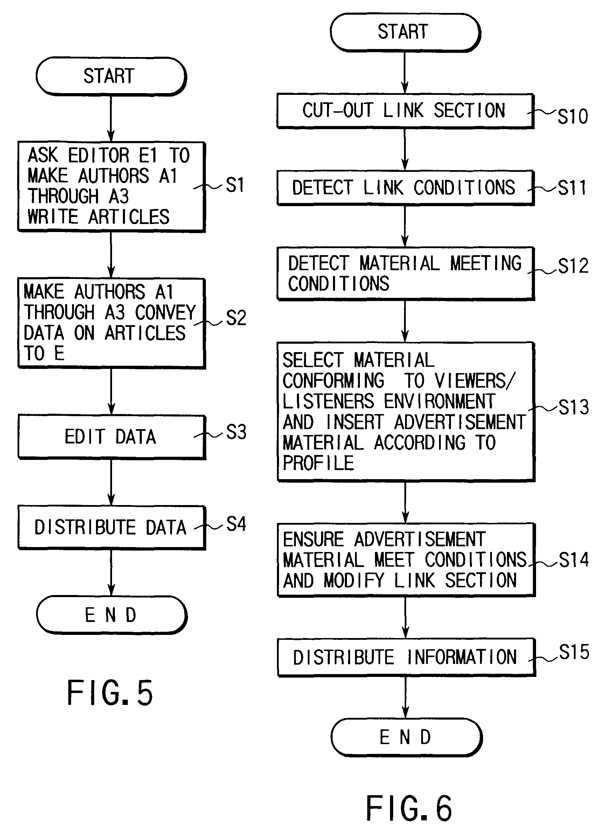

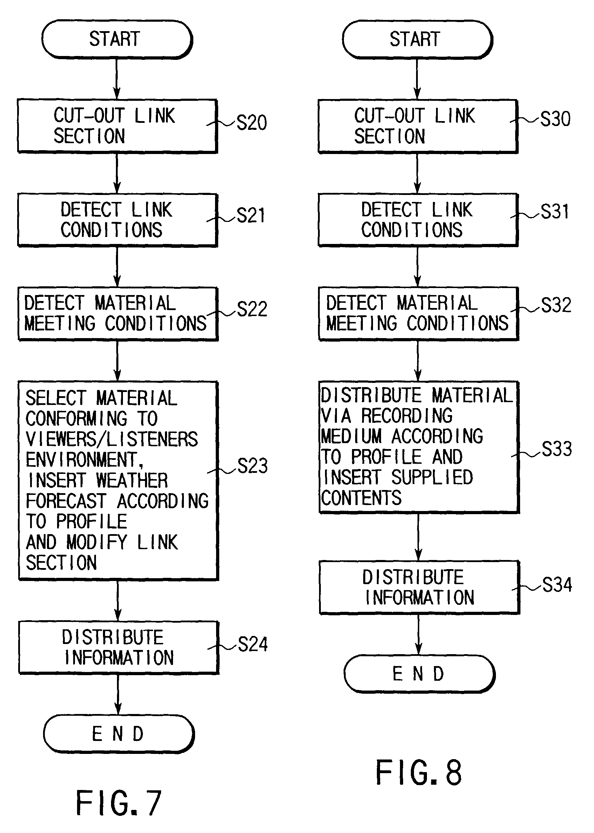

The CPU 12 may operate according to the programs stored in the CD-ROM 21 inserted into the CD-ROM drive 20. Thus, it can perform various processing operations according to the programs stored in the above listed storage devices as will be described hereinafter by referring to FIGS. 5 through 9.

If the computer 10 is of a desk-top type, it may have an appearance as shown in FIG. 2B. Various components of the computer 10 are housed in a cabinet 22 except the display 17 and the keyboard 18. The computer 10 may be replaced by a portable computer such as a lap-top type computer, a notebook type computer or a palm-top type computer.

Now, a data format that can be used for transmitting information through the computer network 1 will be described by referring FIG. 3.

In this embodiment, a common data format is used for information packages 3. An information package 3 basically comprises a title section 3A, a link section 3B, a metadata section 3C, a multimedia sequence section (hereinafter simply referred to as sequence section) 3D.

The title section 3A is a section for identifying the information package 3 and, more specifically, it carries the title of the package. The title section 3A is used to determine the relationship between the information package 3 and some other existing information package(s) and the processing operations to which the information package 3 is subjected to when the computer 10 receives the package.

The link section 3B is used for storing data necessary for transcribing and/or supplementing any of the contents and describing requirements so that the contents will be completed simply by filling deficiencies indicated in the link section. More specifically, it is used to positively authorize transcription of the contents, distribute uncompleted scenarios and scenario formats, couple a given pair of information packages, divide an information package and define the relationship between the metadata section 3C and the sequence section 3D.

An example of description that can be stored in the link section is shown below. This example does not indicate a specific program but describes a specific meaning in each parentheses 〈〉.
〈link id=adv5 resources=""〉
〈meta attrib="sort" value="visual image for advertisement"〉
〈meta attrib="length" value="15 seconds"〉
〈meta attrib="rating" value="PG13"〉
〈/link〉

According to the description, the author of a work specifies insertion of advertisement "adv5" into the work and describes the material of the advertisement (contents) as reference information without preparing any material for him- or herself. Each of the items preceded by "meta" indicates a requirement (processing condition) provided by the author for the material of the advertisement to be inserted.

When the information package 3 with the link section 3B carrying the description is handed over to a distributor, the latter see that the package is devoid of the actual advertisement. Then, the distributor detects materials that meets the requirements specified by the author and selects one of them that best fits one or more subscribers and their viewing environments to fill in the blank. Thus, the information provider can provide a personalized advertisement adapted to one or more than one specific subscribers (subscribers V).

The metadata section 3C carries all the substantial data of the information package 3. Therefore, the subscribers can get necessary information concerning the contents of the information package 3 without reproducing the entire package simply by referencing the metadata section 3C. In short, this section contains data to be used for retrieving information from the information package 3 along with those to be used for remarks and identifying the authors of the articles contained in the package.

The sequence section 3D contains the materials (contents) and data on how to cut out items from the materials and rearrange them in terms of time and space typically written as SGML documents with a fixed DTD (document type definition). The editor E1 is responsible for writing this section, which requires skills of a certain type. The data in this section is transformed into data of various formats adapt to the subscribers when distributed to the latter.

Now, the information processing feature of each of the computers 10 of this embodiment will be described by referring to FIG. 4.

The computers 10 of the system exchange information packages in a predetermined data format (such as written in an HTML). An information package typically contains conditions for processing the contents and a link section carrying data on the locations of the contents.

The information processing feature includes a link cut-out section 30, a link conditions detecting section 31, a condition-meeting materials detecting sections 32, a link material determining section 33 and a material replacing section 34. The link material determining section 33 includes a user-profile conforming materials selecting section 33A, a user preference conforming materials selecting section 33B and a user viewing/listening environment conforming materials selecting section 33C.

The link cut-out section 30 cuts out (extracts) the link section form the information package according to predetermined syntactic rules and keyword matching. The link conditions detecting sections 31 detects the conditions listed in the link section. The condition-meeting materials detecting section 32 detects materials that meet the detected conditions. The link material determining section 33 determines the material selected by the selecting sections 33A through 33C and describes it in the link section. The user-profile conforming materials selecting section 33A selects materials conforming to the user-profile (information on the user attributes). The user preference conforming materials selecting section 33B selects materials conforming to the subscriber's preference on the basis of the information on the recorded utilization history of the user and the information fed back by the user. The user viewing/listening environment conforming materials selecting section 33C selects materials conforming to the user's viewing/listening environment including the resolution of the display of the user terminal and the distribution zone of the distributor. The material replacing section 34 replaces a plurality of materials listed in the link section.

Now, various processing operations of the embodiment will be described by referring to the flow charts of FIGS. 5 through 9.

FIG. 5 shows a flow chart of the operation on the part of the editor E1 and the writers A1 through A3.

The editor E1 selects writers A1 through A3 and asks each of them to contribute an article for an edition to be issued by the editor E1 with conditions to be met by the article including the field of the topic of the article and the approximate number of words of the article (volume of information) (Step S1). Then, in response to the request, each of the writers A1 through A3 writes an article that meet the conditions produced by the editor E1 and provides a data format for the article, which they then stores in a memory device (Step S2).

Assume here that the writer A1 prepares article c1 and sends the contents (including the conditions under which the article is processed) cd1 of the article and the locational data per resolution (cl11, cl12, cl13) of the contents to the editor E1 by way of the computer network 1. The term "locational data" as used herein refers to data telling the locations of the contents (the memory devices storing them) distributed across the network, which do not necessarily mean the location of the memory device of the writer (writer A1) him- or herself.

Similarly, the writer A2 prepares article c2 and sends the contents cd2, the divisional data (c21, c22, c23) of the contents c2 and their locational data (cl21, cl22, cl23) to the editor E1. The writer A3 prepares article c3 and sends the contents c3 and their locational data cl3 to the editor E1. The term "divisional data" as used herein refers to the list of divided contents which consist the original content.

The editor E1 performs an processing operation for editing the articles according to the data sent from the writers A1 through A3 (Step S3).

More specifically, the editor E1 prepares configured data (1) through (6) in a data format as shown below. The configured data (1) through (5) indicate the link section and the configured data (6) shows a data for the sequence of the data (sequence section).
〈link id=c1, resource=(case(resolution)((r1, cl11), (r2, cl12), (r3, cl13)))〉cd1〈/link〉 ...(1)
〈link id=c2-1 resource=(c21, cl22)〉cd2〈/link〉 ...(2)
〈link id=c2-2, resource=cl23〉cd2〈/link〉 ...(3)
〈link id=c3 resource=cl3〉cd3〈/link〉 ... (4)
〈link id=ca resource=NIL〉〈meta attrib=rating value=PG13〈〈/link〉 ... (5)
(c1, c2-1, ca, c2-2, c3) ...(6)

Note that the configured data (1) through (5) are not separated as independent data and cut out by the link cut-out section 30 whenever necessary. In the above listed data, "ca" indicates a material that meets the condition of "PG13" and signifies that no reference can be made to substantial data. "NIL" is a sign indicating that the link destination (locational data) is void. "r1", "r2" and "r3" of the configured data (1) refers to respective degrees of resolution.

The editor E1 produces an information package 3 by performing the above processing operation for editing the articles and sends the package to the distributors D1 through D3 by way of the computer network 1 (Step S4).

Now, various different processing operations to be performed on the part of three distributors D1 through D3 will be described by referring to FIGS. 6 through 8. Upon receiving the configured data from the editor E1, the distributors D1 through D3 performs respective processing operations according to the viewing environments and the profiles of their respective subscribers V1-1 through V1-n, V2-1 through V2-n and V3-1 through V3-n. These processing operations may be specific to the respective distributors D1 through D3.

Firstly, the operation on the part of the distributor D1 will be described.

Upon receiving the information package 3 from the editor E1, the link cut-out section 30 cuts out the link section from the information package 3 (Step S10). Then, the link conditions detecting section 31 detects the link conditions listed in the cut out link section so that materials that meet the detected link conditions will be searched for (Steps S11 and S12).

Thereafter, materials conforming to the resolutions of the displays of the subscribers V1-1 through V1-n according to the viewing/listening environments (including the line speed) and the profiles of the subscribers (Step S13). Thus, the user viewing/listening environment conforming materials selecting section 33C selects a material (with locational data of cl11) as material conforming to the viewing/listening environments of the subscribers V1-1 through V1-n including the resolutions of the displays of the users' terminals.

The user-profile conforming materials selecting section 33A selects an advertisement material (ca1) and inserts it into "ca". Then, once the condition-meeting materials detecting section 32 validates that the advertisement material (ca1) meet the condition "PG13", the locational data (locational links) for the configured data (1) through (5) are modified to produce those listed below (Step S14).

With these processing steps, the configured data (1) through (6) of the link section are modified to read as follows.
〈link id=c1 resource=cl11〉cd1〈/link〉
〈link id=c2-1 resource=(cl21, cl22)〉cd2〈/link〉
〈link id=c2-2 resource=cl23〉cd2〈/link〉
〈link id=c3 resource=cl3〉cd3〈/link〉
〈link id=ca resource=cal〉〈meta attrib=rating value=PG13〉〈/link〉
(c1, c2-1, ca, c2-2, c3)

The modified information package is then transmitted to the subscribers V1-1 through V1-n from the distributor D1 so that the subscribers V1-1 through V1-n now can view the contents of the configured data (of the magazine) as indicated by (cl11, cl21, cl22, cal, cl23, cl3) (Step S15).

Secondly, the operation on the part of the distributor D2 proceeds as follows.

Upon receiving the information package 3 from the editor E1, the distributor D2 performs the processing steps S10 through S12 and then detects materials that meet the link conditions (Step S20 through S22). Thereafter, the user-profile conforming materials selecting section 33A inserts a weather forecast into "ca" according to the profiles of the subscribers V2-1 through V2-n (Step S23).

At this time, the distributor D2 describes the link "TV::12" to the 24 hours weather forecast provided by him- or herself in the locational link of the configured information package (1) through (5). Then, the configured data (1) through (5) are modified to read as follows.
〈link id=cl recource=(case(resolution)((r1, cl11), (r2, cl11) , (r2, cl12), (r3, cl13)))〉cd1〈/link〉
〈link id=c2-1 resource=(cl21, cl22)〉cd2〈/link〉
〈link id=c2-2 resource=cl23〉cd2〈/link〉
〈link id=c3 resource=cl3〉cd3〈/link〉
〈link id=ca resource=TV::12〉〈meta attrib=rating value=PG13〉〈/link〉

The information package containing the above link section is then transmitted to the subscribers V2-1 through V2-n from the distributor D2 (Step S24) so that the subscribers V2-1 through V2-n now can view the contents of the configured data (of the magazine) as indicated by (cl13, cl21, cl22, TV: 12, cl123, cl3).

Thirdly, the operation on the part of the distributor D3 proceeds as follows.

Upon receiving the information package 3 from the editor E1, the distributor D3 performs the processing steps S10 through S12 and then detects materials that meet the link conditions (Step S30 through S32). Assume here that the distributor then distributes a material having an enhanced degree of resolution by means of a recording medium such as DVD. An informational material distributed by some other broadcasting organization under contract with the distributor D3 is inserted into "ca".

Then, the configured data (1) through (5) are modified to read as follows.
〈link id=c1 resource=DVD:cl〉cd1〈/link〉
〈link id=c2-1 resource=(cl21, cl22)〉cd2〈/link〉
〈link id=c2-2 resource=cl23〉cd2〈/link〉
〈link id=c3 resource=cl3〉cd3〈/link〉
〈link id=ca resource=VCR::G#1809877〉〈meta attrib=rating value=PG13〉〈/link〉

The information package containing the above link section is then transmitted to the subscribers V3-1 through V3-n from the distributor D3 (Step S34) so that the subscribers V3-1 through V3-n now can view the contents of the configured data (of the magazine) of the information package as indicated by (DVD:c1, cl21, cl22, VCR:ca, cl23 cl3) after receiving the broadcast contents ca. Note that "DVD: c1" is identical with "cl11", "cl12" or "cl13" and "VCR: ca" indicate the contents recorded by "VCR::G#1809877".

In this way, each of the distributors can provide his or her subscribers with an information package prepared by the editor E1 after processing it in a fashion unique to the distributor.

Now, assume that the subscribers V1-1 through V1-n work as editor E1. Then, the subscriber V1-1 and the distributor D1 will operate in a manner as discussed below.

The subscriber V1-1 send a message specifying an informational material he or she wants to view with conditions (that correspond to cd above). Specifically, the message reads as follow.
〈link id=c5 resource=NIL〉〈meta genre="soccer news"〉〈/link〉 ...(10)
〈link id=c6 resource=NIL〉〈meta genre="NFL news"〉〈/link〉 ...(11)
〈link id=c7 resource=NIL〉〈meta genre="economy news topics"〉〈/link〉 ...(12)
(c5, c6, c7) ...(13)

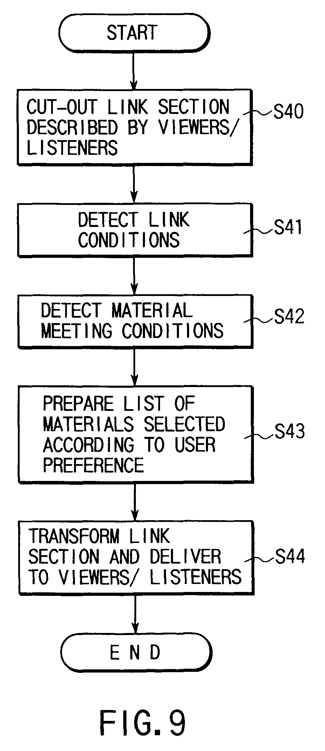

Upon receiving the information package which has the above described configuration, the distributor D1 performs the processing operation as shown in FIG. 9.

Firstly, he or she cuts out the link section from the information and detects, for instance, the link "c5" (Step S40). Then, the condition of "soccer, news" is cut out from the processing conditions and materials meeting the condition are detected (Step S41, S42).

The distributor D1 then prepares a material list "c51, c52, c53, c54" from the detected materials according to the subscriber's preference determined by his or her past viewing records (an operation performed by the user preference conforming materials selecting section 33B) (Step S43). Similarly, the distributor D1 prepares materials lists "c61, c62" and "c71, c72, c73, c74, c75" for the links "c6" and "c7 respectively.

Then, the location of each of the materials on the material lists is identified and the above descriptions (10) through (13) of the information package are transformed to read as follows.
〈link id=c5 resource=cl51〉〈meta genre=" soccer news"〉〈/link〉 ...(20)
〈link id=c5 resource=cl52〉〈meta genre=" soccer news"〉〈/link〉 ...(21)
〈link id=c5 resource=cl53〉〈meta genre="soccer news"〉〈/link〉 ...(22)
〈link id=c5 resource=cl54〉〈meta genre="soccer news"〉〈/link〉 ...(23)
〈link id=c6 resource=cl61〉〈meta genre="NFL news"〉〈/link〉 ...(24)
〈link id=c6 resource=cl62〉〈meta genre="NFL news"〉〈/link〉 ...(25)
〈link id=c7 resource=cl71〉〈meta genre="economy news topics"〉〈/link〉 ...(26)
〈link id=c7 resource=cl72〉〈meta genre="economy news topics"〉〈/link〉 ...(27)
〈link id=c7 resource=cl73〉〈meta genre="economy news topics"〉〈/link〉 ...(28)
〈link id=c7 resource=cl74〉〈meta genre="economy news topics"〉〈/link〉 ...(29)
〈link id=c7 resource=cl75〉〈meta genre="economy news topics"〉〈/link〉 ...(30)
((c51, c52, c53, c54), (c61, c62), (c71, c72, c73, c74, c75)) ...(31)

The transformed information is then sent from the distributor D1 to the subscribers V1-1 with the right information package (Step S44). Upon receiving the package, the subscriber V1-1 performs an operation of replacing the materials on the basis of accessibility, taking his or her own viewing environment (an operation performed by the material replacing section 34) to view the contents.

As described above in detail, according to the invention, there is provided an information distribution system adapted to prepare new information by combining different informational materials distributed across a communication network and distributing such information through the network that allows editing operations of preparing and/or altering information to be conducted easily according to editing conditions including the viewing/listening environment and the information preparing environment. Thus, it is now possible to provide an practically feasible information distribution system.

With such a system, a predetermined data format is used to distribute information telling the processing conditions and the locations of informational materials distributed across a communication network to prepare new informational materials that meet the viewing/ listening environment of each of the subscribers and the conditions for editing such materials. For example, in a news distribution system established according to the present invention, a news package will be defined by the topics specified by a subscriber and sent to the distributor who is a news service provider, who will then prepare a recording reservation package for news broadcasting services and send it to the subscriber. Thus, the subscriber can view news that meet his or her taste by using the news package. Finally, when a plurality of writers cooperate to write an article or a series of articles, each of the writers can see the entire article(s) to control his or her own part of the article(s) by means of the information package to facilitate the operation of writing an article or a series of articles.

## Claims

1. An information processing apparatus connected to a network characterized by comprising:
means (19) for receiving information including location data of contents and condition data for editing the contents; and
means (12) for editing the contents according to the condition data and preparing an information package (3).

2. An information processing apparatus according to claim 1, characterized in that the information package comprises a title section (3A) including a title of the information package as indicator, a retrieval data section (3C) including retrieval data for retrieving the information package, a sequence section (3D) including location data of the contents arranged by the editing means and a link section (3B) including the condition data and the location data.

3. An information processing apparatus connected to a network characterized by comprising:
means (19) for receiving an information package;
means (30) for extracting a link section including condition data for editing contents and location data of the contents from the information package;
means (31) for retrieving contents meeting the condition data; and
processing means (34) for editing the retrieved contents according to the condition data in the link section and altering the information package according to the editing.

4. An information processing apparatus according to claim 3, characterized by comprising:
means (19) for transmitting the information package altered by the processing means to a predetermined processing apparatus via the network,
characterized in that the processing means edits the contents according to the condition data and applicable conditions specified by the predetermined processing apparatus.

5. An information processing apparatus according to claim 3, characterized in that the information package comprises a title section (3A) including a title of the information package as indicator, a retrieval data section (3C) including retrieval data for retrieving the information package, a sequence section (3D) including location data of the contents arranged by the editing means and a link section (3B) including the condition data and the location data.

6. An information processing method to be used in an information processing apparatus connected to a network, the method characterized by comprising the steps of:
receiving information including location data of contents and condition data for editing the contents (S2); and
editing the contents according to the condition data and preparing an information package (S3).

7. An information processing method according to claim 6, characterized in that the information package comprises a title section (3A) including a title of the information package as indicator, a retrieval data section (3C) including retrieval data for retrieving the information package, a sequence section (3D) including location data of the contents arranged by the editing means and a link section (3B) including the condition data and the location data.

8. An information processing method to be used in an information processing apparatus connected to a network, the method characterized by comprising the steps of:
receiving an information package;
extracting a link section including condition data for editing contents and location data of the contents from the information package (S10, S20, S30);
retrieving contents meeting the condition data (S11, S21, S31); and
editing the retrieved contents according to the condition data in the link section and altering the information package according to the editing(S13, S14, S23, S33).

9. An information processing method according to claim 8, characterized by further comprising the steps of:
transmitting the information package altered by the editing step to a predetermined processing apparatus via the network (S15, S24, S34, S44),
characterized in that the alteration step includes a substep of editing the contents according to the condition data and applicable conditions specified by the predetermined processing apparatus (S43).

10. An information processing method according to claim 5, characterized in that the information package comprises a title section (3A) including a title of the information package as indicator, a retrieval data section (3C) including retrieval data for retrieving the information package, a sequence section (3D) including location data of the contents arranged by the editing means and a link section (3B) including the condition data and the location data.

11. A memory storing computer-executable program code for processing information, the program code characterized by comprising:
means for causing a computer to receive information including location data of contents and condition data for editing the contents; and
means for causing a computer to edit the contents according to the condition data and prepare an information package (3).

12. A program code according to claim 11, characterized in that the information package comprises a title section (3A) including a title of the information package as indicator, a retrieval data section (3C) including retrieval data for retrieving the information package, a sequence section (3D) including location data of the contents arranged by the editing means and a link section (3B) including the condition data and the location data.

13. A memory storing computer-executable program code for processing information, the program code characterized by comprising:
first means for causing a computer to receive an information package;
second means for causing a computer to extract a link section including condition data for editing contents and location data of the contents from the information package;
third means for causing a computer to retrieve contents meeting the condition data; and
fourth means for causing a computer to edit the contents detected according to the condition data in the link section and alter the information package according to the editing.

14. A program code according to claim 13, characterized by further comprising:
means for causing a computer to transmit the altered information package to a predetermined processing apparatus via the network,
characterized in that the fourth means causes a computer to edit the contents according to the condition data and applicable conditions specified by the predetermined processing apparatus.

15. A program code according to claim 13, characterized in that the information package comprises a title section (3A) including a title of the information package as indicator, a retrieval data section (3C) including retrieval data for retrieving the information package, a sequence section (3D) including location data of the contents arranged by the editing means and a link section (3B) including the condition data and the location data.
